# DEMANDE DE BREVET EUROPEEN

(11) **EP 1 813 794 A1**
(43) Date de publication de la demande: **01.08.2007**
(21) Numéro de dépôt: 07300748.6
(22) Date de dépôt: 26.01.2007
(51) Int. Cl.: F02D 41/02, F02D 41/14, F02D 41/10

(54) **Procede de commande d'un groupe motopropulseur de vehicule automobile**

(30) Priorité: 30.01.2006 FR 0650321
(71) Demandeur: PEUGEOT CITROËN AUTOMOBILES S.A., 78140 Velizy Villacoublay (FR)
(72) Inventeur: MAUREL, Stéphane, 92130, ISSY LES MOULINEAUX (FR)

(57) **Abrégé**

L'invention concerne un procédé de commande d'un groupe motopropulseur de véhicule automobile, tel qu'un véhicule comprenant un embrayage piloté.

Le procédé consiste à piloter, depuis une unité de commande, un moteur relié à un arbre primaire par un organe de couplage piloté, lorsque cet organe de couplage est piloté pour passer d'un état glissant dans lequel le moteur et l'arbre primaire ont des vitesses (Wmot, Weq) différentes, à un état collé dans lequel ces vitesses sont identiques. Le moteur est piloté pour générer un créneau de couple (CR) lorsque l'organe de couplage passe à l'état collé.

L'invention s'applique à l'amélioration du confort de conduite.

## Description

L'invention concerne un procédé pour piloter, depuis une unité de commande, un moteur relié à un arbre primaire par un organe de couplage piloté, lorsque cet organe de couplage est piloté pour passer d'un état glissant dans lequel le moteur et l'arbre primaire ont des vitesses différentes, à un état collé dans lequel ces vitesses sont identiques.

L'invention s'applique notamment aux véhicules équipés d'une boîte de vitesse manuelle pilotée, éventuellement à double embrayage, c'est-à-dire dans lesquels l'organe de couplage, qui est du type embrayage, est piloté par l'unité de commande pour s'ouvrir puis se fermer notamment lors des changements de rapports.

Cet organe de couplage est par exemple un embrayage sec, humide, à poudre, magnétique, ou autre, permettant de doser la puissance prélevée au moteur et transmise à l'arbre primaire, c'est-à-dire à des roues motrices du véhicule.

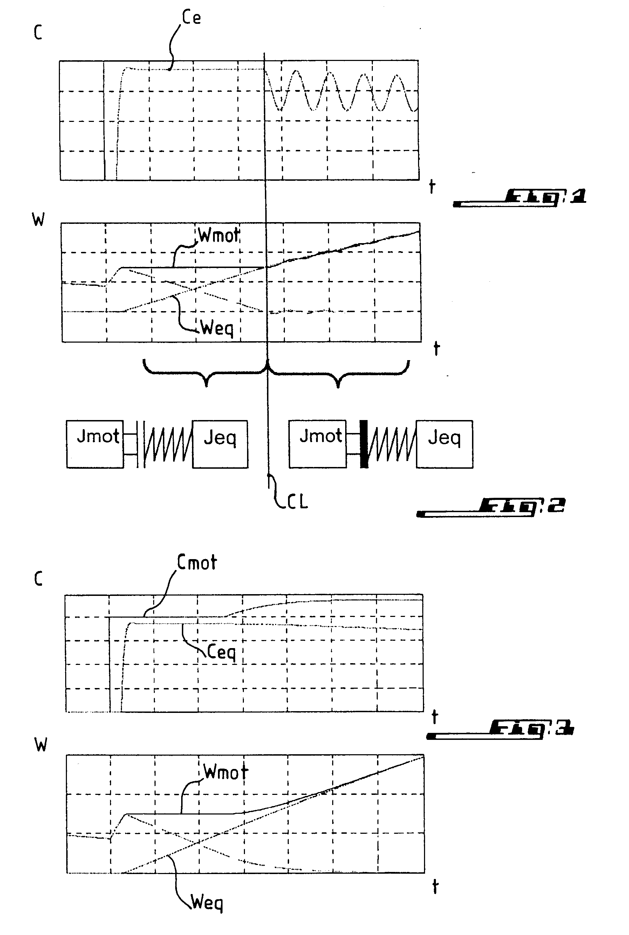

Le passage de l'état glissant à l'état collé, c'est-à-dire le collage de l'embrayage qui est repérée par CL dans la figure 1, tend à générer des oscillations. Ce sont d'une part des oscillations du couple transmis, noté Ce, et d'autre part par des oscillations de la vitesse de rotation du moteur Wmot et de la vitesse de rotation de l'arbre primaire Weq.

Ces oscillations sont le résultat de l'accouplement de deux éléments rotatifs inertiels par un ressort ayant une certaine élasticité ou raideur en torsion.

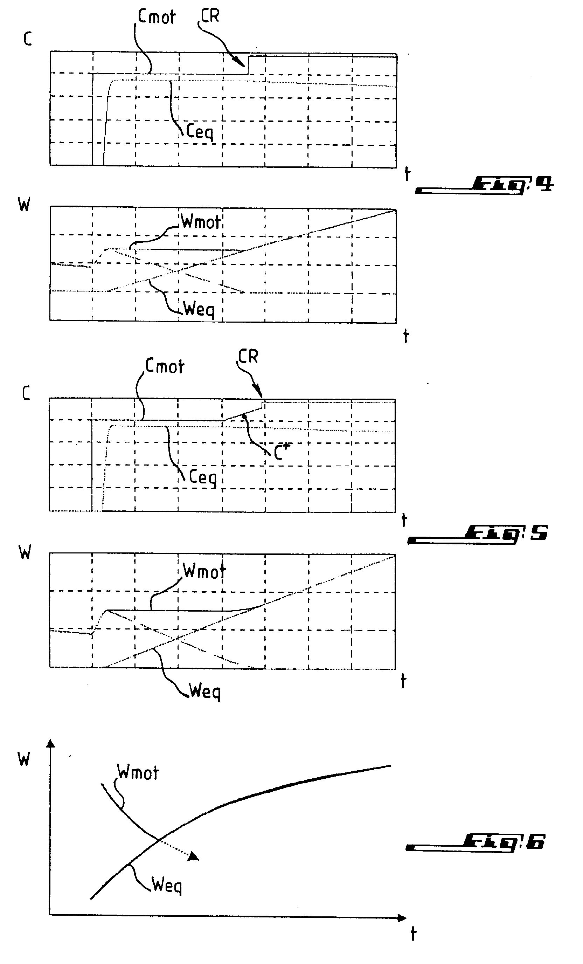

Dans le cas d'un véhicule, qui est représenté schématiquement en figure 2, il s'agit du couplage d'éléments rotatifs du moteur présentant un moment d'inertie en rotation noté Jmot, avec l'arbre primaire et des organes de transmission associés qui présentent d'une part une inertie équivalente notée Jeq et d'autre part une certaine élasticité ou raideur en torsion notée K.

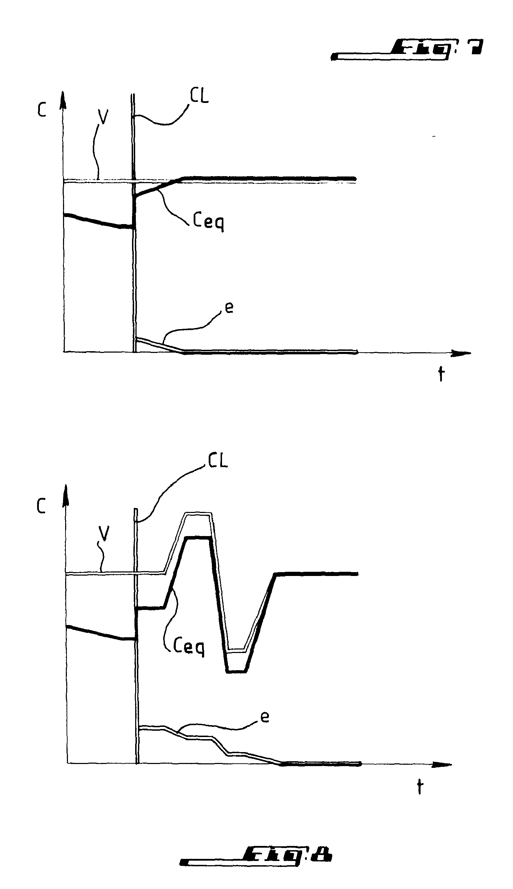

Il a déjà été envisagé de diminuer ces oscillations, en pilotant le moteur pour modifier le couple Cmot qu'il délivre de sorte que la vitesse de ce moteur Wmot s'approche de celle de l'arbre primaire Weq, pendant que l'organe d'accouplement passe de l'état glissant à l'état collé. Cette régulation connue, qui est représentée sur le graphe de la figure 3, permet de transmettre aux roues motrices un couple Ceq sensiblement constant tout au long de l'actionnement de l'embrayage.

Cependant, cette solution augmente le temps de glissement de l'embrayage, ce qui tend à réduire sa durée de vie, et nécessite de le surdimensionner ce qui en augmente le coût de fabrication. De plus, cette solution nécessite d'augmenter significativement le temps global de collage de l'embrayage, ce qui nuit au confort de conduite.

Le but de l'invention est de remédier à ces inconvénients en proposant un procédé de commande capable d'éviter les oscillations sans augmenter le temps de glissement de l'organe de couplage.

A cet effet, l'invention a pour objet un procédé pour piloter, depuis une unité de commande, un moteur relié à un arbre primaire par un organe de couplage piloté, lorsque cet organe de couplage est piloté pour passer d'un état glissant dans lequel le moteur et l'arbre primaire ont des vitesses différentes, à un état collé dans lequel ces vitesses sont identiques, consistant à piloter le moteur pour qu'il génère un créneau de couple lorsque l'organe de couplage passe à l'état collé.

L'application d'un créneau de couple pendant un temps relativement court pendant juste avant ou juste après le collage de l'embrayage permet d'éviter l'apparition des oscillations, sans qu'il soit nécessaire de faire patiner l'embrayage, c'est-à-dire sans qu'il soit nécessaire d'augmenter le temps de collage.

L'invention concerne également un procédé de commande tel que défini ci-dessus, consistant à piloter le moteur pour que le créneau de couple ait une amplitude correspondant au produit d'une valeur d'inertie du moteur avec une valeur de dérivée par rapport au temps de la différence des vitesses de l'arbre primaire et du moteur à un instant précédant le passage à l'état collé.

L'invention concerne également un procédé de commande tel que défini ci-dessus, consistant en outre à piloter le moteur avant collage de l'organe de couplage pour augmenter graduellement le couple qu'il génère afin de limiter la valeur de dérivée par rapport au temps de la différence des vitesses de l'arbre primaire et du moteur.

L'invention concerne également un procédé de commande tel que défini ci-dessus, appliqué à un moteur thermique, consistant à modifier temporairement une valeur d'avance à l'allumage ou une valeur d'angle d'injection de ce moteur avant collage de l'organe de couplage, et à rétablir une valeur d'avance à l'allumage ou d'angle d'injection normale pour générer le créneau de couple.

L'invention concerne également un procédé de commande tel que défini ci-dessus, dans lequel l'unité de commande intègre l'anticipation d'un temps de réponse du moteur pour piloter la génération par le moteur du créneau de couple.

L'invention concerne également un procédé de commande tel que défini ci-dessus, consistant à piloter le moteur pour annuler progressivement l'écart de commande en couple après collage en un certain intervalle de temps prédéterminé ou avec une pente déterminée.

L'invention concerne également un procédé tel que défini ci-dessus, consistant à piloter le moteur pour annuler progressivement l'écart de commande en couple après collage lors et en proportion des variations de consigne conducteur.

L'invention sera maintenant décrite plus en détail, et en référence aux dessins annexés qui en illustrent une forme de réalisation à titre d'exemple non limitatif.
La figure 1 est un graphique montrant des oscillations de couple et de vitesses de rotation tendant à apparaître au collage d'un embrayage ;
La figure 2 est une représentation d'éléments de moteur et de transmission modélisés ;
La figure 3 est un graphique donnant l'évolution des couples et vitesses de rotation sur collage d'un embrayage piloté de l'Etat de la technique ;
La figure 4 est un graphique donnant l'évolution des couples et vitesses de rotation sur collage d'un embrayage piloté selon l'invention ;
La figure 5 est un graphique donnant l'évolution des couples et vitesses de rotation sur collage d'un embrayage piloté selon une variante de l'invention ;
La figure 6 est un graphique donnant l'évolution des vitesses de rotation sur collage d'un embrayage piloté selon une variante de l'invention ;
La figure 7 est un graphique illustrant un rattrapage de l'erreur en couple selon l'invention dans un temps fini ;
La figure 8 est un graphique illustrant un rattrapage de l'erreur en couple selon l'invention dissimulée lors des variations de consigne du conducteur.

L'invention s'applique à un embrayage piloté qui est associé à une unité de commande qui agit sur un moteur pour en modifier en temps réel les paramètres de fonctionnement. L'embrayage est piloté en collage soit par cette unité de commande, soit par un dispositif dédié qui est relié à cette unité de commande.

Cet embrayage est implanté entre un organe rotatif du moteur tel qu'un arbre de sortie du moteur, et un arbre de transmission qui est par exemple un arbre primaire de boîte de vitesses, cette boîte de vitesses entraînant elle-même en rotation des organes de transmission à des roues motrices du véhicule.

L'unité de commande qui agit sur différents organes du véhicule est notamment reliée à la pédale d'accélérateur du véhicule, pour prendre en compte une valeur de consigne de couple qui correspond sensiblement à l'inclinaison de la pédale d'accélérateur.

En début de collage, l'embrayage est dans un état glissant dans lequel il transmet un couple mécanique, mais dans lequel les vitesses de rotation de l'arbre primaire et de l'arbre moteur sont différentes. Durant cette phase, l'unité de commande pilote l'embrayage et éventuellement le moteur pour délivrer aux roues motrices un couple Ceq correspondant à la valeur de consigne de couple.

Selon l'invention, l'unité de commande pilote le moteur pour qu'il génère un créneau de couple au moment, un peu avant, ou un peu après le collage de l'embrayage. Ce créneau de couple qui est une augmentation brutale du couple moteur Cmot, d'amplitude prédéterminée, est représenté en figure 4 en étant repéré par CR. Il a pour effet d'annuler ou de réduire très fortement les oscillations qui tendent à apparaître au collage de l'embrayage.

Ce créneau a une amplitude qui est déterminée dans l'unité de commande, à partir du moment d'inertie Jmot des éléments rotatifs du moteur, et de la dérivée de la différence entre la vitesse de rotation de l'arbre secondaire Weq et de l'arbre moteur Wmot à un instant t0-précédant le collage de l'embrayage.

Avantageusement l'amplitude de ce créneau est déterminée dans l'unité de commande avec la relation : CR=Jmot.d(Weq(t0-) - Wmot(t0-))/dt.

La détermination de l'instant t0 auquel l'embrayage passe de l'état glissant à collé peut être effectuée en temps réel par comparaison des mesures des vitesses de rotation Weq et Wmot. Cet instant de collage peut également être estimé par anticipation, à partir de paramètres de fonctionnement et de commande de l'embrayage, et des régimes mesurés ou estimés du moteur et/ou de l'arbre primaire.

L'unité de commande est avantageusement conçue pour anticiper le temps de réaction du moteur, de manière à assurer que le créneau CR soit généré à un instant qui est le plus proche possible de l'instant de collage. A cet effet, l'unité de commande peut agir sur le moteur à un instant qui précède le collage effectif de l'embrayage, cet instant étant déterminé sur la base d'une estimation du temps de collage de l'embrayage et d'une estimation du temps de réaction du moteur.

Dans le cas d'un moteur thermique à allumage commandé, l'unité de commande agit sur ce moteur pour modifier temporairement l'avance d'allumage avant de générer le créneau de couple. L'unité de commande pilote alors le moteur en prenant une garde à l'avance d'allumage, par exemple en début de collage de l'embrayage, puis elle rétablit brutalement l'avance d'allumage normale pour que le moteur génère le créneau de couple.

La valeur de la garde d'avance à l'allumage est déterminée à partir de caractéristiques du moteur, par exemple dans l'unité de commande, pour correspondre à la valeur de créneau de couple CR à générer conformément à la relation donnée plus haut. Cette garde à l'allumage peut être prise progressivement en fonction de l'état d'ouverture de l'embrayage, c'est à dire de l'écart entre arbre moteur et arbre secondaire dans l'embrayage.

Si le couple Ceq à délivrer aux roues motrices pendant la phase de glissement est supérieur au couple maximal Cmot qui pourra être délivré par le moteur après collage de l'embrayage, alors la consigne de couple à délivrer aux roues pendant le glissement est diminuée par l'unité de commande. Cette consigne est diminuée jusqu'à une valeur inférieure à la valeur maximale de couple qui pourra être délivrée aux roues après collage, pour assurer que le créneau de couple CR puisse être généré par le moteur après collage.

Pour assurer que le créneau de couple CR ait une amplitude correspondant à la relation donnée plus haut, l'unité de commande agit sur le moteur pour modifier la vitesse moteur Wmot afin que la dérivée de la différence entre la vitesse d'arbre primaire Weq et du moteur Wmot reste inférieure à une valeur prédéterminée.

Un exemple de cette situation est illustré en figure 5 dans laquelle l'unité de commande agit sur le moteur pour qu'il augmente graduellement son couple Cmot en fin de glissement, afin d'augmenter sa vitesse Wmot, ce qui est repéré par C+. Dans cette situation, le couple délivré aux roues n'est pas détérioré, puisqu'il répond à une consigne prise en compte par l'organe de couplage.

Comme représenté en figure 6, la commande selon l'invention permet de fermer l'embrayage tout en assurant que le régime moteur Wmot diminue constamment jusqu'à l'instant du collage, ce qui améliore le confort de conduite. Les commandes connues de l'état de la technique, telles que celle représentée en figure 3 impliquent au contraire une augmentation de la vitesse de rotation du moteur Wmot avant collage de l'embrayage, ce qui nuit à l'agrément de conduite.

Dans l'exemple qui a été décrit, le créneau CR a une amplitude qui est déterminée à partir de la relation donnée plus haut. Ce créneau CR peut également avoir une amplitude déterminée différemment, cette amplitude étant par exemple forfaitaire, ou dépendante de la charge appliquée au véhicule, ou bien dépendante des dérivées d'une ou plusieurs vitesses de rotation.

Après collage de l'embrayage et application du créneau CR, le couple Cmot délivré par le moteur est sensiblement différent de la valeur de consigne V donnée par le conducteur du véhicule via la pédale d'accélérateur. Cet écart peut être annulé progressivement avec une fonction de régulation intégrée à l'unité de commande, qui est initiée après application du créneau de couple CR.

Une telle fonction d'initialisation est représentée schématiquement en figure 7, qui est un graphe comprenant une courbe représentative du couple moteur tel que restitué par les roues motrices, et repéré par Ceq, et une autre courbe, repérée par V représentative de la consigne de couple de l'utilisateur, et correspondant à l'inclinaison de la pédale d'accélérateur.

Dans l'exemple de la figure 7, la consigne de couple V ne varie pas durant le collage de l'embrayage, de sorte qu'elle est représentée par une droite horizontale. Après collage de l'embrayage, repéré par CL, il existe un écart e entre la consigne de couple et la valeur du couple Ceq délivré aux roues motrices.

Comme représenté sur cette figure, la commande agit sur le moteur pour qu'il rattrape cet écart de couple e, de façon linéaire, en un temps prédéterminé ou selon une pente prédéterminée et ce, que le conducteur modifie ou ne modifie pas la consigne de couple utiliseur.

Dans la variante représentée sur la figure 8, lorsque la consigne de couple conducteur V est constante, le couple effectivement délivré aux roues motrices est maintenu constant conformément à la volonté du conducteur de ne pas modifier le couple délivré au roues.

Comme représenté en figure 8, lorsque le conducteur agit sur la pédale d'accélérateur de sorte qu'il modifie la consigne V du couple à délivrer aux roues, l'écart e est progressivement annulé en modifiant depuis l'unité de commande des valeurs de consigne appliquées au moteur, de façon bornée en valeur ou en dérivée en rapport de la consigne conducteur V ou de sa variation ou de la valeur absolue de sa variation, afin d'éviter que le conducteur ne perçoive ou ne soit perturbé par le rattrapage de l'écart e. Ainsi, la commande de l'utilisateur rejoint progressivement la consigne appliquée au moteur par l'unité de commande.

Dans l'exemple décrit plus haut, le créneau de couple est généré en modifiant l'avance d'allumage avant d'appliquer le créneau et en la rétablissant pour appliquer le créneau. D'autres solutions peuvent également être envisagées pour générer le créneau de couple.

Dans le cas d'un moteur à distribution variable, la charge moteur peut être modifiée en faisant varier d'un tour à l'autre du moteur la quantité d'air et de carburant entrant dans la chambre de combustion.

La variation de couple peut aussi être obtenue par modification de la quantité de carburant injecté dans le cas d'un moteur diesel, ou encore par modification de l'angle d'injection dans le cas d'un moteur diesel suralimenté.

Ce créneau peut également être obtenu au moyen d'un alternateur lié en rotation avec le moteur, qui est exploité pour dissiper de l'énergie avant de générer le créneau de couple, cette dissipation d'énergie étant alors brutalement interrompue pour produire le créneau de couple. Un frein mécanique peut également être utilisé de manière analogue.

Ce créneau de couple peut encore également être obtenu au moyen d'un moteur électrique lié en rotation soit avec le moteur thermique, soit avec l'arbre primaire.

## Revendications

1. Procédé pour piloter, depuis une unité de commande, un moteur relié à un arbre primaire par un organe de couplage piloté, lorsque cet organe de couplage est piloté pour passer d'un état glissant dans lequel le moteur et l'arbre primaire ont des vitesses (Wmot, Weq) différentes, à un état collé dans lequel ces vitesses sont identiques, consistant à piloter le moteur pour qu'il génère un créneau de couple (CR) lorsque l'organe de couplage passe à l'état collé.

2. Procédé selon la revendication 1, consistant à piloter le moteur pour que le créneau de couple (CR) ait une amplitude correspondant au produit d'une valeur d'inertie (Jmot) du moteur avec une valeur de dérivée par rapport au temps de la différence des vitesses de l'arbre primaire (Weq) et du moteur (Wmot) à un instant précédant le passage à l'état collé.

3. Procédé selon la revendication 2, consistant en outre à piloter le moteur avant collage de l'organe de couplage pour augmenter graduellement le couple (Cmot) qu'il génère afin de limiter la valeur de dérivée par rapport au temps de la différence des vitesses de l'arbre primaire (Weq) et du moteur (Wmot).

4. Procédé selon l'une des revendications 1 à 3, appliqué à un moteur thermique, consistant à modifier temporairement une valeur d'avance à l'allumage ou une valeur d'angle d'injection de ce moteur avant collage de l'organe de couplage, et à rétablir une valeur d'avance à l'allumage ou d'angle d'injection normale pour générer le créneau de couple (CR).

5. Procédé selon l'une des revendications 1 à 4, dans lequel l'unité de commande intègre l'anticipation d'un temps de réponse du moteur pour piloter la génération par le moteur du créneau de couple (CR).

6. Procédé selon l'une des revendications 1 à 5, consistant à piloter le moteur pour annuler progressivement l'écart de commande en couple après collage en un certain intervalle de temps prédéterminé ou avec une pente déterminée.

7. Procédé selon l'une des revendications 1 à 5, consistant à piloter le moteur pour annuler progressivement l'écart de commande en couple après collage lors et en proportion des variations de consigne conducteur.
